# FASCICULE DE BREVET EUROPEEN

(11) **EP 2 896 936 B1**
(45) Date de publication et mention de la délivrance du brevet: **13.04.2016**
(21) Numéro de dépôt: 15000007.3
(22) Date de dépôt: 06.01.2015
(51) Int. Cl.: G01C 21/16, B64D 43/00, G01C 23/00, G01S 17/89, G06T 7/00, G01C 21/00, G01S 11/12

(54) **PROCÉDÉ D'ASSISTANCE À LA NAVIGATION POUR GIRAVION, PAR AFFICHAGE DYNAMIQUE D'UNE REPRÉSENTATION DU MONDE EXTÉRIEUR CONSTRUITE EN VOL INSTANTANÉMENT ET/OU EN DIFFÉRÉ**
Navigationshilfe für Hubschrauber durch Echtzeit und/oder verzögerte dynamische Anzeige einer Darstellung der Außenwelt während des Fluges.
Navigation assistance for helicopter through real time and/or delayed dynamic display of a representation of the exterior world built during flight

(30) Priorité: 20.01.2014 FR 1400103
(43) Date de publication de la demande: 22.07.2015
(73) Titulaire: Airbus Helicopters, 13725 Marignane Cedex (FR)
(72) Inventeur: Belanger, Nicolas, F-13270 FOS SUR MER (FR); Filias, François-Xavier, F-13330 Pelissanne (FR); Pertuisot, Geoffroy, F-13700 Marignane (FR); Damiani, Nicolas, F-13009 Marseille (FR)
(74) Mandataire: GPI & Associés

(56) Documents cités:
- US-B1- 7 642 929
- IL-KYUN JUNG ET AL: "High resolution terrain mapping using low altitude aerial stereo imagery", PROCEEDINGS OF THE EIGHT IEEE INTERNATIONAL CONFERENCE ON COMPUTER VISION. (ICCV). NICE, FRANCE, OCT. 13 - 16, 2003; [INTERNATIONAL CONFERENCE ON COMPUTER VISION], LOS ALAMITOS, CA : IEEE COMP. SOC, US, vol. CONF. 9, 13 octobre 2003 (2003-10-13) , pages 946-951, XP010662483, DOI: 10.1109/ICCV.2003.1238450 ISBN: 978-0-7695-1950-0
- STEDER B ET AL: "Visual SLAM for Flying Vehicles", IEEE TRANSACTIONS ON ROBOTICS, IEEE SERVICE CENTER, PISCATAWAY, NJ, US, vol. 24, no. 5, 1 octobre 2008 (2008-10-01), pages 1088-1093, XP011332776, ISSN: 1552-3098, DOI: 10.1109/TRO.2008.2004521
- PATRICK O'BRIEN ; DAVID C. BAUGHMAN ; H. BRUCE WALLACE: "Helicopter synthetic vision based DVE processing for all phases of flight", DEGRADED VISUAL ENVIRONMENTS: ENHANCED, SYNTHETIC, AND EXTERNAL VISION SOLUTIONS 2013, vol. 8737, 16 mai 2013 (2013-05-16), XP002731634, DOI: 10.1117/12.2016555

## Description

La présente invention est du domaine des systèmes d'assistance à la navigation pour giravion par traitement d'images capturées en vol et par construction en vol puis affichage dynamique d'une représentation du monde extérieur à partir des images préalablement capturées.

La présente invention relève plus particulièrement de tels systèmes d'assistance à la navigation aptes à afficher une représentation dynamique du monde extérieur en situation de perte de visibilité pour le pilote d'un giravion.

Une telle situation de perte de visibilité est notamment provoquée par une évolution du giravion proche du sol, qui génère alors typiquement la formation de nuages de particules dans l'environnement extérieur du giravion. Lesdits nuages de particules, tels que de poussières ou de neige par exemple, provoquent en effet une situation de perte de visibilité communément qualifiée par l'anglicisme « Brown-out/White-out ».

Les giravions sont des aéronefs dont la sustentation est procurée par au moins un rotor à axe sensiblement vertical en étant aptes notamment à évoluer à proximité du sol non seulement à vitesses élevées mais aussi typiquement à basses vitesses et/ou en vol stationnaire. A titre indicatif, les basses vitesses de progression d'un giravion sont communément considérées inférieures à 50 Kt (50 noeuds) et les vitesses élevées peuvent atteindre 125 Kt (125 noeuds), voire 150 kt (150 noeuds) et plus dans le cas notamment d'un giravion équipé d'hélices propulsives à axe sensiblement horizontal procurant une propulsion complémentaire en translation du giravion.

Les giravions présentent l'avantage de pouvoir évoluer sous de telles conditions de vol dans un quelconque environnement susceptible de ne pas avoir été préalablement aménagé voire même repéré.

Cependant dans ce contexte, il se pose le problème d'une situation de « Brown-out/White-out » lorsque le giravion évolue à proximité du sol, à titre indicatif à une distance du sol inférieure à 15 m. En effet à proximité du sol, le ou les rotors équipant le giravion soulèvent des nuages de particules générant une perte de visibilité pour le pilote du giravion. Il en ressort qu'il est utile d'assister le pilote à la navigation en cas de perte de visibilité.

Pour procurer une telle assistance à la navigation, il est connu en situation de « Brown-out/White-out » de fournir au pilote par voie d'affichage une représentation dynamique artificielle de l'environnement extérieur du giravion, ci-après désigné par « monde extérieur ». A cet effet, la représentation du monde extérieur affichée est construite par un système d'assistance à la navigation à partir d'images capturées en vol préalablement à la situation de « Brown-out/White-out ».

On pourra à ce propos se reporter aux documents EP1650534 (EADS Deutschland), US7642929 (US AIR FORCE) et US8019490 (APPLIED MINDS) qui divulguent des modalités de mise en oeuvre de tels systèmes d'assistance à la navigation en situation de « Brown-out/White-out ».

Les solutions connues mettent en oeuvre au moins un jeu de caméras avant orientées vers l'avant du giravion, en étant conjointement pointées vers une même ligne de visée avant. Subsidiairement, le giravion peut être équipé d'au moins un jeu de caméras latérales pointées vers une même ligne de visée latérale.

Les notions de « frontal », « latéral », « arrière », « droite » et « gauche » sont communément identifiées par rapport au sens de progression en translation vers l'avant du giravion.

Les caméras d'un même jeu fournissent individuellement des images de l'environnement extérieur du giravion pour finalement fournir des images stéréoscopiques au système d'assistance à la navigation générant alors des données d'élévation de terrain relatives essentiellement à la topographie du terrain. Les images, ci-après désignées par « images capturées », sont séquentiellement capturées par les caméras à une fréquence donnée sous forme de données numériques constituées de pixels.

Des moyens de traitement d'image, tels que des moyens de texturation par exemple, sont éventuellement utilisés pour traiter par calcul les images capturées afin d'améliorer l'effet visuel de l'affichage de la représentation du monde extérieur issue des images capturées par les caméras.

En l'absence d'une situation de « Brown-out/White-out » et sur requête du pilote, les images capturées courantes saisies par les caméras peuvent être affichées pour procurer au pilote un affichage dynamique d'une représentation du monde extérieur, ci-après désignée dans ce cas spécifique par « monde extérieur courant ».

Par ailleurs l'instrumentation de bord du giravion comprenant notamment une centrale inertielle fournit classiquement des données de navigation au moins relatives au vecteur d'état courant du giravion. Le vecteur d'état du giravion est notamment représentatif de la position relative ou absolue, de la vitesse du giravion et plus particulièrement de la vitesse sol, de l'orientation et/ou du changement d'attitude du giravion au fur et à mesure de sa progression.

Les données de navigation du giravion sont exploitées par le système d'assistance à la navigation pour construire une représentation dynamique du monde extérieur affichée en situation de « Brown-out/White-out ».

Les données de navigation courantes du giravion sont intégrées aux images lors de leur capture en générant des métadonnées qui sont exploitées par le système d'assistance à la navigation pour construire et afficher une représentation du monde extérieur selon la variation du vecteur d'état courant du giravion, ci-après désignée dans ce cas spécifique par « monde reconstitué ».

A cet effet, des moyens de cartographie et localisation simultanées génèrent par calcul des cartes à localisation intégrée en mettant en oeuvre des processus de calcul connus, tels que par exemple les processus de calcul communément désignés par SLAM (d'après l'acronyme anglais Simultaneous Localization And Mapping) ou par CML (d'après l'acronyme anglais Concurrent Mapping and Localization). On pourra par exemple se reporter à ce propos au document « Visual SLAM for flying vehicles » IEEE TRANSACTIONS ON ROBOTICS, IEEE SERVICE CENTER, PISCATAWAY, NJ, US, vol. 24, no.5, 1 octobre 2008 (2008-10-01), pages 1088-1093, DOI: 10.1109/TRO.2008.2004521.

Une méthode de calcul exploitant des filtres de Kalman spécifiques peut être exploitée pour parfaire la pertinence des cartes à localisation intégrée construites. On pourra par exemple se reporter à ce propos au document « Hight resolution terrain mapping using low altitude aerial stereo imagery» (IL-KYUN JUNG et al.), PROCEEDING OF THE EIGHT IEEE INTERNATIONAL CONFERENCE ON COMPUTER VISION (ICCV). NICE, FRANCE, Oct.13-16, 2003. INTERNATIONAL CONFERENCE ON COMPUTER VISION, LOS ALAMITOS, CA : IEEE COMP. SOC, US, vol. CONF. 9, 13 OCTOBRE 2003, PAGES 946-951, XP010662483, DOI : 10.11/ICCV 2003.1238450.

Les processus de calcul de cartographie et localisation simultanées sont fondés sur une construction par incrémentation des cartes à localisation intégrée au moyen d'algorithmes de calcul prédictifs mettant classiquement en oeuvre des filtres de Kalman. Les cartes à location intégrée sont construites à partir des métadonnées intégrant les images capturées auxquelles sont affectées les données de navigation séquentiellement identifiées par l'instrumentation de bord simultanément à la saisie séquentielle par les caméras des images capturées.

Les images capturées individuellement à un même instant par les caméras d'un même jeu sont exploitées pour fournir au système d'assistance à la navigation les métadonnées relatives aux territoires captés à un instant donné par les caméras d'un même jeu, ci-après désignés par « territoires capturés ». Les cartes à localisation intégrée sont ainsi successivement générées en vol par un processus de calcul de cartographie et localisation simultanées et sont stockées à une fréquence temporelle donnée dans une base de données cartographiques à localisation intégrée.

Pour améliorer la pertinence de telles base de données cartographiques à localisation intégrée, diverses sources d'informations peuvent être utilisées, tel que proposé par le document "Helicopter synthetic vision based DVE processing for all phases of flight" (PATRICK O'BRIEN ; DAVID C. BAUGHMAN ; H. BRUCE WALLACE) DEGRADED VISUAL ENVIRONMENTS: ENHANCED, SYNTHETIC, AND EXTERNAL VISION SOLUTIONS 2013, vol. 8737, 16 mai 2013 (2013-05-16), xp002731634, DOI: 10.1117:12.2016555.

La base de données cartographiques à localisation intégrée est exploitée par une unité de traitement de données pour générer en vol la construction et l'affichage dynamique du monde reconstitué. A cet effet, l'unité de traitement compare par calcul les données de navigation courantes du giravion avec les données de navigation intégrées aux différentes cartes à localisation intégrée stockées dans la base de données pour générer l'affichage du monde reconstitué.

Plus particulièrement, l'unité de traitement identifie et extrait les cartes à localisation intégrée en fonction de la variation des données de navigation courantes du giravion pour construire et afficher le monde reconstitué avec une dynamique d'affichage dont l'évolution varie selon les données de navigation courantes du giravion.

On pourra par exemple se reporter au document EP2133662 (HONEYWELL INT INC) qui divulgue de telles modalités de construction et d'affichage d'un monde reconstitué conforme à l'environnement extérieur d'une plateforme hôte par un système d'assistance à la navigation mettant en oeuvre un processus de calcul de cartographie et localisation simultanées.

Dans ce contexte, le monde reconstitué peut être affiché pour procurer au pilote une assistance à la navigation en cas de situation de perte brutale de visibilité, telle qu'en cas de présence de nappes de brouillard ou de nuages de particules environnant le giravion, notamment en situation de « Brown-out/White-out ». A cet effet, le système d'assistance à la navigation intègre des moyens de détection d'une situation de « Brown-out/White-out » qui provoquent la mise en oeuvre de l'unité de traitement et l'affichage du monde reconstitué pour pallier la perte de visibilité par le pilote de l'environnement extérieur du giravion.

Une détection d'une situation de « Brown-out/White-out » est par exemple réalisée :
-) par repérage de la présence d'un nuage de particules à partir d'une analyse des pixels, plus particulièrement de leur densité, définissant les images capturées. L'analyse des pixels définissant les images capturées doit être effectuée selon des modalités permettant d'identifier la situation de « Brown-out/White-out » dans les plus brefs délais, tout en étant suffisamment fiable pour interdire ou autoriser l'affichage du monde reconstitué en cas de besoin.
-) par comparaison par calcul entre la hauteur-sol courante du giravion et un seuil de hauteur-sol générant classiquement une situation de « Brown-out/White-out », telle que ladite distance de séparation entre le giravion et le sol inférieure à 15 m. Une telle solution est habituellement préférée car elle permet d'obtenir rapidement l'identification d'une situation « Brown-out/White-out » à partir de capacités de calcul modestes.
-) plus simplement, par activation d'un organe de commande d'affichage activable par le pilote confronté à une situation de « Brown-out/White-out » ou souhaitant, en situation de visibilité, disposer du monde reconstitué en réalité augmentée par superpositions d'images virtuelles à la vision réelle.

Dans ce contexte, l'assistance à la navigation procurée par la construction et l'affichage du monde reconstitué nécessite une puissance de calcul et de mémoire considérable. Une telle puissance de calcul et de mémoire doit être disponible à bord du giravion pour permettre le plus rapidement possible la construction et l'affichage en vol du monde reconstitué selon la variation des données de navigation courantes du giravion, avec une fiabilité, une qualité visuelle et une évolution de la dynamique d'affichage performantes.

Plus particulièrement, les opérations de calcul effectuées par le système d'assistance à la navigation nécessitent des capacités de calcul et de mémoire importantes pour procurer à des fréquences de calcul optimisées :
-) une capture et un traitement à séquences soutenues des images capturées par les caméras, pour procurer une qualité visuelle satisfaisante des images capturées et pour générer les métadonnées à partir desquelles sont élaborées les cartes à localisation intégrée,
-) une obtention de cartes à localisation intégrée précises en nombre le plus important possible, rapidement disponibles, afin de fournir à l'unité de traitement des ressources suffisantes pour construire et afficher le monde reconstitué et finalement pour procurer au pilote une assistance à la navigation fiable et confortable,
-) un affichage du monde reconstitué avec un rafraîchissement des images affichées à cadences soutenues, pour obtenir une évolution de la dynamique d'affichage du monde reconstitué conférant audit affichage une fluidité confortable et sécurisante pour le pilote.

En outre, la fiabilité, la pertinence et la fluidité de l'évolution de la dynamique d'affichage du monde reconstruit sont dépendantes de la disponibilité immédiate en temps opportun de l'ensemble des informations devant être corrélées entre elles lors des différentes opérations conduisant à la construction et à l'affichage du monde reconstitué.

Il en ressort une recherche constante d'un système d'assistance à la navigation performant procurant un affichage du monde reconstitué fiable, pertinent et avec une qualité et une évolution de la dynamique de cet affichage optimisées, tout en étant soumis à une contrainte de capacité limitée de la puissance de calcul et de mémoire nécessaires à l'obtention rapide d'un tel affichage.

Dans le domaine du traitement d'images par calcul, il est classiquement mis en oeuvre des unités de traitement telles que par exemple du type FPGA (d'après l'acronyme anglais Field Programmable Gate Array). Les unités de traitement FPGA ou unités de traitement analogues, permettent de reconfigurer les circuits logiques des moyens de calcul mis en oeuvre par les unités de traitement. Selon les choix effectués par les programmeurs des modalités de fonctionnement de l'unité de traitement, les circuits logiques de calcul sont configurés pour optimiser l'échange entre eux et le traitement des données.

Dans le domaine des systèmes d'assistance à la navigation procurant un affichage dynamique du monde extérieur, une solution courante pour optimiser l'exploitation des capacités des moyens de calcul et de mémoire embarqués à bord d'un giravion est de restreindre les opérations de calcul à effectuer en exploitant une base de données cartographiques à localisation intégrée élaborée au sol préalablement à la mission de vol du giravion. Une telle base de données est construite à partir d'images capturées par un quelconque giravion lors de missions de vol précédentes.

Une telle solution présente l'avantage de réduire les opérations de calcul à effectuer en vol et en conséquence permet de réserver les capacités de calcul et de mémoire du système d'assistance à la navigation embarqué à bord du giravion pour la construction et l'affichage du monde reconstitué.

Cependant, une telle solution n'est pas satisfaisante en raison de la perte de pertinence des informations fournies par la base de données cartographiques à localisation intégrée élaborée préalablement à la mission de vol du giravion.

Par ailleurs, l'exploitation d'un système d'assistance à la navigation embarqué procurant au besoin un affichage dynamique de la représentation du monde extérieur mérite d'être optimisée. Il est par exemple avantageux d'exploiter au sol les informations stockées et/ou générées au cours d'une mission de vol par le système d'assistance à la navigation pour analyser à postériori ladite mission de vol et/ou les territoires survolés par le giravion.

Cependant outre de telles exploitations potentielles, il apparaît opportun de rechercher et de mettre en oeuvre d'autres exploitations possibles du système d'assistance à la navigation. Une telle recherche doit bien évidemment être menée en tenant compte des contraintes liées à la recherche d'un système d'assistance à la navigation performant avec notamment des puissances de calcul et de mémoire limitées néanmoins aptes à fournir en temps utiles les informations nécessaires à la construction et à l'affichage du monde reconstitué dans le cadre des contraintes précédemment mentionnées.

Dans ce contexte, le but de la présente invention est de proposer un procédé de mise en oeuvre d'un système d'assistance à la navigation par affichage d'une représentation du monde extérieur en cas de perte de visibilité, telle que notamment classiquement générée par une situation de « Brown-out/White-out ». Sur le fondement du constat qui vient d'être fait et dont relève la démarche de la présente invention, il est plus particulièrement recherché d'optimiser l'exploitation faite en vol du système d'assistance à la navigation en tenant compte d'un compromis satisfaisant à trouver entre les diverses contraintes précédemment mentionnées.

Le procédé de la présente invention est un procédé de mise en oeuvre d'un système d'assistance à la navigation d'un giravion par construction et par affichage en vol d'une représentation dynamique du monde extérieur sur un écran.

Le procédé de la présente invention comprend les opérations suivantes effectuées en vol :
-) sur requête du pilote, capturer séquentiellement des images frontales relatives à l'environnement extérieur du giravion. Une telle requête du pilote est par exemple effectuée par activation d'un bouton de commande dit de capture d'images dédié à cette requête. Les images frontales sont capturées par au moins un jeu de caméras avant embarquées sur le giravion en étant orientées vers une ligne de visée avant commune pour classiquement fournir des images stéréoscopiques à une unité de traitement du système d'assistance à la navigation.
-) élaborer séquentiellement par calcul des cartes frontales à localisation intégrée à partir des images frontales et des données de navigation du giravion. Classiquement, de telles données de navigation comprennent notamment au moins le vecteur d'état du giravion et sont typiquement fournies par l'instrumentation de bord du giravion simultanément à la capture séquentielle des images frontales. Puis, lesdites cartes frontales à localisation intégrée sont stockées dans une première base de données.
-) identifier une situation de perte de visibilité provoquant la construction par calcul et l'affichage dynamique sur l'écran d'une première représentation dynamique du monde extérieur, dite tel que précédemment définie « monde reconstitué ». La construction et l'affichage du monde reconstitué sont opérés à partir d'une extraction séquentielle des cartes frontales à localisation intégrée stockées dans la première base de données, selon la variation des données de navigation courantes du giravion comparées aux données de navigation intégrées aux cartes frontales à localisation intégrée.

Selon la présente invention, un tel procédé est principalement remarquable en ce qu'il comprend les opérations suivantes :
-) simultanément à la capture des images frontales, capturer séquentiellement des images complémentaires relatives au monde extérieur par des jeux complémentaires de caméras. Les images stéréoscopiques fournies individuellement par les caméras des différents jeux de caméras équipant le giravion sont désignées par la suite « images capturées ».

Les jeux complémentaires de caméras comprennent au moins un jeu de caméras latérales droites, au moins un jeu de caméras latérales gauches et au moins un jeu de caméras arrière.

Les caméras d'un même jeu complémentaire de caméras sont bien entendu orientées vers une ligne de visée commune pour fournir classiquement des images stéréoscopiques des territoires captés à un instant donné par un jeu de caméras donné. Plus particulièrement il est bien évidemment compris que les caméras du jeu de caméras latérales droites sont orientées vers une ligne de visée latérale droite commune, les caméras du jeu de caméras latérales gauches sont orientées vers une ligne de visée latérale gauche commune et les caméras du jeu de caméras arrière sont orientées vers une ligne de visée arrière commune.
-) affecter par calcul à chacune des images capturées des données de datation fournies par l'instrumentation de bord et des données d'origine relatives à l'identification du jeu de caméras (2,3,4,5) dont sont issues les images capturées. Une telle opération d'affection par calcul de données de datation et de données d'origine numériques aux images capturées est génératrice de métadonnées. De telles métadonnées sont générées pour chacune des images capturées, et associent entre elles au moins les images capturées, lesdites données de datation et lesdites données d'origine. Les métadonnées comprennent des métadonnées frontales propres aux images frontales et intégrées dans les cartes à localisation intégrée stockées dans ladite première base de données. Les métadonnées comprennent aussi des métadonnées complémentaires propres aux images complémentaires respectivement fournies par un jeu de caméras complémentaires donné.
-) stocker les métadonnées complémentaires dans une deuxième base de données et élaborer séquentiellement par calcul lesdites cartes frontales à localisation intégrée.
-) sur requête du pilote, construire par calcul et afficher sur l'écran une deuxième représentation dynamique du monde extérieur, dite « monde extrapolé ».

Une telle requête du pilote est par exemple effectuée par activation d'un bouton de commande, dit d'affichage du monde extrapolé, dédié à cette requête. Le monde extrapolé est composé des cartes frontales à localisation intégrée séquentiellement extraites de la première base de données selon la variation des données de navigation courantes du giravion comparées aux données de navigation intégrées aux cartes frontales à localisation intégrée.

Des données complémentaires d'élévation de terrain issues des métadonnées complémentaires sont adjointes auxdites cartes frontales à localisation intégrée extraites de la première base de données lors de la construction et de l'affichage dynamique dudit monde extrapolé. Ladite adjonction est effectuée par mise en corrélation entre les données de datation et les données d'origine respectivement affectées aux images frontales et aux images complémentaires.

Ces dispositions sont telles que ladite mise en corrélation identifie, selon la variation des données de navigation courantes du giravion, les positions relatives entre-elles des cartes frontales à localisation intégrée et des données complémentaires d'élévation de terrain issues des images capturées fournies à un même instant par les différents jeux de caméras.

Les données complémentaires d'élévation de terrain sont potentiellement au moins en partie constituées par les métadonnées complémentaires qui sont sélectivement extraites de la deuxième base de données et adjointes aux cartes frontales à localisation intégrée.

Les données complémentaires d'élévation de terrain sont encore potentiellement au moins en partie constituées par des cartes complémentaires à localisation intégrée préalablement construites et stockées dans une troisième base de données.

Les cartes complémentaires à localisation intégrée sont construites à partir des métadonnées complémentaires intégrant les données de navigation du giravion fournies par l'instrumentation de bord simultanément à la capture séquentielle des images complémentaires.

La construction préalable des cartes complémentaires à localisation intégrée est notamment opérée sous réserve d'une capacité de calcul du système d'assistance à la navigation, ladite capacité de calcul étant évaluée disponible vis-à-vis d'un seuil de capacité de calcul prédéterminé.

Selon une forme préférée de réalisation, le monde extrapolé est potentiellement construit prioritairement à partir des cartes complémentaires à localisation intégrée lorsqu'elles sont disponibles, sinon à partir des images complémentaires.

Plus particulièrement par suite de la requête du pilote relative à la construction et à l'affichage dynamique du monde extrapolé, le procédé comprend en outre les opérations suivantes :
-) vérifier par calcul, au fur et à mesure de l'évolution dynamique de l'affichage du monde extrapolé, la disponibilité de cartes complémentaires à localisation intégrée aptes à être corrélées avec les cartes frontales à localisation intégrée pour construire et afficher le monde extérieur extrapolé, puis
-) en cas d'une telle disponibilité de cartes complémentaires à localisation intégrée, construire et afficher le monde extrapolé, sinon dans le cas contraire :
-) élaborer les cartes complémentaires à localisation intégrée nécessaires à la construction et à l'affichage du monde extrapolé sous réserve d'une capacité de calcul du système d'assistance à la navigation évaluée disponible vis-à-vis dudit seuil de capacité de calcul, sinon :
-) extraire par calcul de la deuxième base de données les métadonnées complémentaires nécessaires à la construction et à l'affichage du monde extrapolé.

Selon une forme préférée de réalisation, le pilote a le choix soit d'attendre que les capacités de calcul soient disponibles pour construire les cartes secondaires à localisation intégrée nécessaires à la construction et à l'affichage dynamique du monde extrapolé, soit en cas d'urgence d'exploiter directement les métadonnées complémentaires pour construire et afficher le monde extrapolé.

Un tel choix d'une exploitation immédiate des métadonnées complémentaires par le pilote est notamment réalisé par activation d'un organe de commande, dit d'arrêt d'une élaboration des cartes complémentaires à localisation intégrée, dédié à cette fonction.

Plus particulièrement selon une forme préférée de réalisation, l'opération d'extraction par calcul de la deuxième base de données des métadonnées complémentaires nécessaires à la construction et à l'affichage dynamique du monde extrapolé, est placée sous la dépendance d'une requête du pilote.

Par ailleurs, il est de préférence proposé de trier les images capturées par les différents jeux de caméras pour exclure des images analysées comme non pertinentes.

Plus particulièrement, au cours de l'opération de capture séquentielle des images capturées, le procédé comprend une étape de sélection par calcul des images capturées par application d'au moins un critère de pertinence prédéfini relatif à une continuité territoriale entre les différents territoires capturés respectivement captés à un même instant par les différents jeux de caméras équipant le giravion. Les images capturées déduites non pertinentes au regard dudit critère de pertinence sont supprimées préalablement à leur traitement par le système d'assistance à la navigation.

Ledit au moins un critère de pertinence est de préférence prédéfini selon l'un quelconque au moins des paramètres de calcul suivants :
-) un premier seuil d'éloignement entre le giravion et un territoire capturé qui est capté à un instant donné par un quelconque jeu de caméras, et
-) un deuxième seuil d'éloignement entre différents territoires capturés respectivement captés à un même instant par les différents jeux de caméras équipant le giravion.

Les informations relatives aux distances d'éloignement entre le giravion et un quelconque dit territoire capturé sont classiquement fournies par les jeux de caméras générant des images stéréoscopiques.

Selon une forme avantageuse de réalisation, le procédé comprend en outre des modalités de repérage de territoires d'intérêt permettant d'établir et d'afficher un plan de vol entre une position courante du giravion et au moins un dit territoire d'intérêt.

A cet effet, au cours de l'opération de capture séquentielle des images capturées, le procédé comprend en outre une étape de repérage d'au moins un territoire capturé, dit territoire d'intérêt. L'étape de repérage est opérée par application d'au moins un critère d'intérêt prédéfini relatif à l'aptitude dudit territoire d'intérêt à être exploité par le giravion. A l'issue de ladite étape de repérage, une donnée d'intérêt est sélectivement intégrée aux métadonnées dont sont issues les images capturées relatives audit territoire d'intérêt.

Par suite et selon une forme préférée de réalisation de l'invention, le procédé comprend, sur requête du pilote notamment opérée par activation par le pilote d'un organe de commande dit d'élaboration d'un plan de vol dédié à cette fonction, une opération d'élaboration d'un plan de vol entre la position courante du giravion et ledit au moins un territoire d'intérêt.

Ledit plan de vol est potentiellement affiché en surimpression sur la représentation du monde extérieur affichée par l'écran. Une telle surimpression est potentiellement affichée sur le monde reconstitué et/ou sur le monde extrapolé.

Selon une forme de réalisation, ladite étape de repérage peut être effectuée par le pilote du giravion. La donnée d'intérêt est intégrée aux métadonnées sur requête du pilote, notamment par activation d'un organe de commande, dit de marquage des images capturées, dédié à cette fonction.

Selon une autre forme de réalisation, considérée isolément ou en combinaison avec la précédente, ladite étape de repérage est potentiellement une opération de traitement algorithmique des pixels des images de type à reconnaissance de forme. Dans ce cas, l'intégration de la donnée d'intérêt aux métadonnées est opérée par calcul conformément à une reconnaissance d'au moins une forme prédéfinie sur les images capturées suite à ladite opération de traitement algorithmique des pixels des images.

Ladite reconnaissance de la forme prédéfinie est par exemple classiquement réalisée conformément à la mise en oeuvre d'un processus de traitement algorithmique des pixels des images de type à reconnaissance de forme, par comparaison entre les images capturées et de telles formes prédéfinies répertoriées dans une base de données annexe préétablie.

Selon divers exemples de réalisation considéré isolément ou en combinaison, ledit au moins un critère d'intérêt est l'un quelconque au moins des critères d'intérêt suivants relatifs à l'aptitude d'un territoire d'intérêt à constituer pour le giravion : une zone de posé, une zone de refuge, une zone de danger et/ou une zone d'intervention.

Par ailleurs, l'identification de ladite situation de perte de visibilité est potentiellement effectuée suivant l'une quelconque au moins des opérations suivantes :
-) une opération d'analyse par calcul des pixels définissant les images capturées,
-) une opération de comparaison par calcul entre la hauteur-sol courante du giravion et un seuil de hauteur-sol identifié générateur d'une situation de perte de visibilité (Brown-out/White-out), et/ou
-) sur requête du pilote confronté à une situation de perte de visibilité, tel que par activation d'un organe de commande d'affichage.

Il est proposé dans le cadre d'une d'analyse par calcul des pixels définissant les images capturées, d'analyser plus particulièrement la variance d'intensité des pixels des images capturées pour identifier ladite situation de perte de visibilité.

Plus particulièrement et selon une forme avantageuse de mise en oeuvre de l'opération d'analyse par calcul des pixels définissant les images capturées, le procédé comprend une opération de contrôle de l'affichage du monde reconstitué mettant en oeuvre les étapes suivantes :
-) échantillonner séquentiellement par calcul à une fréquence donnée un nombre prédéfini d'images frontales, dites images frontales échantillonnées,
-) établir par calcul une plage glissante d'un nombre prédéfini de dites images frontales échantillonnées,
-) calculer une première variance d'intensité des pixels d'une image frontale échantillonnée médiane de ladite plage et comparer par calcul ladite première variance calculée avec un premier seuil de variance d'intensité de pixels, puis
-) dans le cas où ladite première variance calculée est supérieure audit premier seuil de variance, réitérer l'étape d'échantillonnage des images frontales, sinon dans le cas contraire autoriser la construction et l'affichage dynamique du monde reconstitué.

Par suite, le procédé comprend une opération de contrôle (45) d'affichage du monde extrapolé (Mex) mettant en oeuvre les étapes suivantes :
-) dans le cas d'une autorisation de construction du monde reconstitué par suite du contrôle de l'affichage du monde reconstitué, calculer des deuxièmes variances d'intensité des pixels des images capturées respectivement captées à un instant donné par les différents jeux de caméras et considérées deux à deux,
-) comparer par calcul lesdites deuxièmes variances avec un deuxième seuil de variance d'intensité de pixels, puis dans le cas où l'une au moins desdites deuxièmes variances est supérieure au deuxième seuil de variance, réitérer l'opération de contrôle d'affichage du monde reconstitué, notamment depuis l'étape d'échantillonnage des images frontales, sinon dans le cas contraire autoriser la construction et l'affichage du monde extrapolé, puis
-) comparer lesdites deuxièmes variances avec un troisième seuil de variance d'intensité de pixels d'une valeur supérieure audit deuxième seuil de variance, puis dans le cas où lesdites deuxièmes variances sont supérieures au troisième seuil de variance interdire la construction et l'affichage du monde extrapolé en maintenant l'exécution de l'opération de contrôle de l'affichage du monde reconstitué, sinon dans le cas contraire maintenir la construction et l'affichage dynamique du monde extrapolé.

Des exemples de réalisation de la présente invention vont être décrits en relation avec les figures des planches annexées, dans lesquelles :

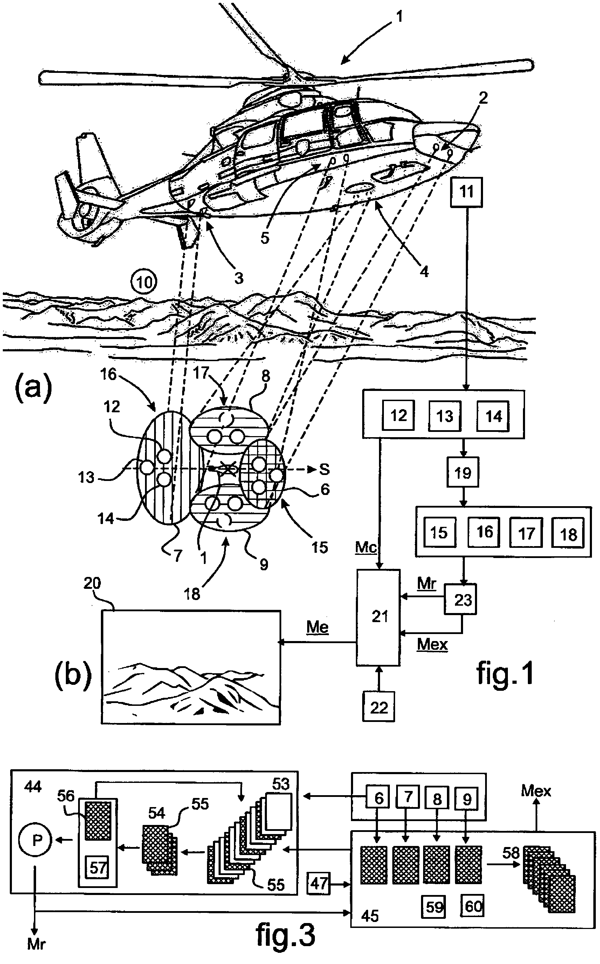

- la fig.1 est composée de deux schémas (a) et (b) associés, illustrant pour le schéma (a) un giravion équipé d'un système d'assistance à la navigation de la présente invention et pour le schéma (b) des modalités d'acquisition d'images et d'affichage dynamique de différentes représentations du monde extérieur par mise en oeuvre dudit système d'assistance à la navigation.

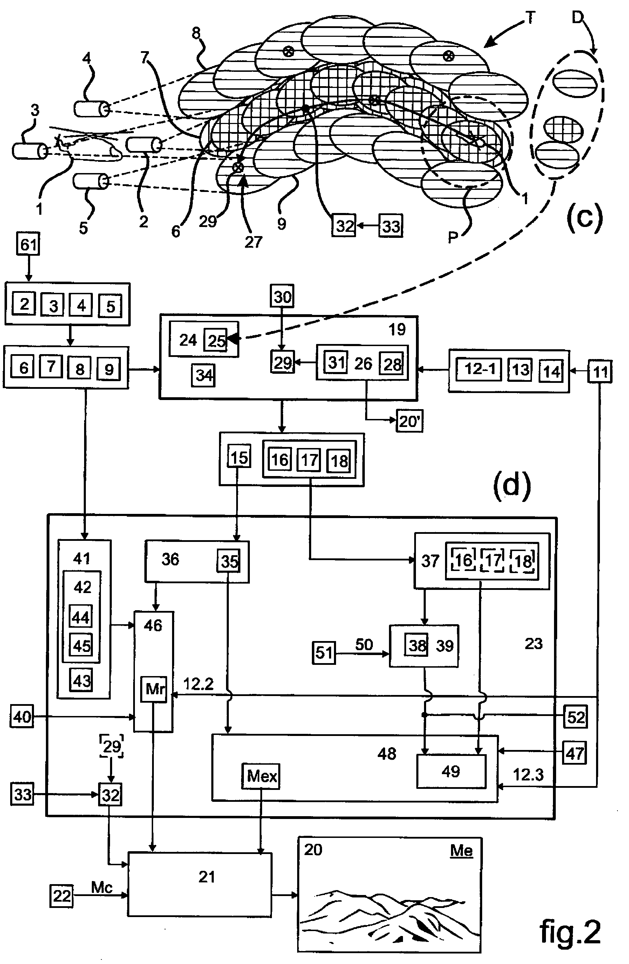

- la fig.2 est composée de deux schémas (c) et (d) associés, illustrant pour le schéma (c) des modalités d'acquisition d'images le long d'un parcours effectué par le giravion représenté sur le schéma (a) de la fig.1 et pour le schéma (d) des processus d'une telle acquisition d'images et de construction puis d'affichage dynamique des différentes représentations du monde extérieur illustrées sur le schéma (b).
- la fig.3 est une représentation logique de modalités d'analyse par calcul des pixels des images acquises par le système d'assistance à la navigation équipant le giravion illustré sur la fig.1.

Les éléments communs et opérations communes représentés sur les différentes figures sont respectivement désignés par des dénominations communes en étant identifiés avec les mêmes numéros et/ou lettres de référence.

Sur la fig.1, un giravion 1 est équipé d'un système d'assistance à la navigation par affichage en vol de différentes représentations dynamiques de l'environnement extérieur du giravion, dit monde extérieur Me.

A cet effet, le giravion 1 est équipé de différents jeux de caméras 2,3,4,5 pour acquérir des images capturées 6,7,8,9 par les caméras relatives aux différents territoires 10 successivement survolés par le giravion 1 au cours d'un trajet. Les images capturées 6,7,8,9 sont des images stéréoscopiques issues des images fournies individuellement par les caméras d'un jeu de caméras donné, à partir desquelles images stéréoscopiques sont construites et affichées en vol différentes représentations du mondes extérieur Me. Plus particulièrement, le giravion 1 est équipé :
-) d'au moins un jeu de caméras avant 2 orientées vers l'avant du giravion 1 suivant le sens S de progression en translation vers l'avant du giravion 1. Les caméras dudit au moins un jeu de caméras avant 2 sont orientées vers une ligne de visée avant commune pour capturer des images frontales stéréoscopiques 6.
-) d'au moins un jeu de caméras arrière 3 orientées vers l'arrière du giravion 1 suivant le sens S de progression en translation vers l'avant du giravion 1. Les caméras dudit au moins un jeu de caméras arrière 3 sont orientées vers une ligne de visée arrière commune pour capturer des images arrière stéréoscopiques 7.
-) d'au moins un jeu de caméras latérales droites 5 orientées latéralement vers la droite du giravion 1 suivant le sens S de progression en translation vers l'avant du giravion 1. Les caméras dudit au moins un jeu de caméras latérales droites 5 sont orientées vers une ligne de visée latérale droite commune pour capturer des images latérales droites stéréoscopiques 8.
-) d'au moins un jeu de caméras latérales gauches 4 orientées latéralement vers la gauche du giravion 1 suivant le sens S de progression en translation vers l'avant du giravion 1. Les caméras dudit au moins un jeu de caméras latérales gauches 4 sont orientées vers une ligne de visée latérale gauche commune pour capturer des images latérales gauches stéréoscopiques 9.

Les notions « d'images latérales droites stéréoscopiques » 8, « d'images latérales gauche stéréoscopiques » 9 et « d'images arrière stéréoscopiques » 7 sont par la suite regroupées dans une notion globale « d'images complémentaires » 7,8,9.

Par ailleurs, l'ensemble des images stéréoscopiques fournies par les différents jeux de caméras, comprenant les images frontales 6 et les images complémentaires 7,8,9, sont désignées par « images capturées ».

Le giravion 1 est aussi classiquement équipé d'une instrumentation de bord 11 générant communément des données de navigation 12 (12-1 ;12-2 ;12-3) comprenant au moins le vecteur d'état courant du giravion 1 représentatif de sa position relative ou absolue, de son orientation et/ou de son changement d'attitude au fur et à mesure de sa progression.

L'instrumentation de bord 11 du giravion 1 fournit par ailleurs des données de datation 13 et des données d'origine 14 relatives à l'identification du jeu de caméras 2,3,4,5 dont sont issues les images capturées 6,7,8,9. De telles données d'origine 14 permettent de mettre en relation les différentes images capturées 6,7,8,9 avec les jeux de caméras 2,3,4,5 dont elles sont respectivement issues et par suite peuvent être exploitées pour déduire par calcul les positions relatives des différentes images capturées 6,7,8,9 les unes par rapport aux autres..

Sur requête 61 du pilote, les caméras des différents jeux de caméras 2,3,4,5 sont mises en oeuvre pour fournir les images capturées 6,7,8,9 à une unité d'acquisition d'images 19. L'unité d'acquisition d'images 19 traite les images capturées 6,7,8,9, les données de navigation 12, les données de datation 13 et les données d'origine 14 pour générer des métadonnées 15,16,17,18 exploitées par une unité de traitement 23 pour construire diverses représentations du monde extérieur Me, dont un monde reconstruit Mr et/ou un monde extrapolé Mex.

Les différentes métadonnées comprennent des métadonnées frontales 15, des métadonnées arrière 16, des métadonnées latérales droites 17 et des métadonnées latérales gauches 18. Les métadonnées arrière 16 propres aux images arrière, les métadonnées latérales droites 17 propres aux images latérales droites et les métadonnées latérales gauches 18 propres aux images latérales gauches sont regroupées sous la notion de « métadonnées complémentaires » 16,17,18.

Le monde, reconstruit Mr et/ou le monde extrapolé Mex sont affichés par un écran 20 par l'intermédiaire d'une unité d'affichage 21 exploitant à cet effet les informations fournies par l'unité de traitement 23.

Sur requête 22 du pilote, un monde extérieur courant Mc est potentiellement affiché sur l'écran 20. Le monde extérieur courant Mc est affiché par l'intermédiaire de l'unité d'affichage 21, potentiellement soit à partir des images frontales 6 seules, soit à partir de l'ensemble des images capturées 6,7,8,9 par les différents jeux de caméras 2,3,4,5.

En cas d'affichage du monde extérieur courant Mc à partir des images capturées 6,7,8,9 par les différents jeux de caméras 2,3,4,5, les différentes images capturées 6,7,8,9 sont potentiellement affichées dans des fenêtres d'affichage distinctes positionnées sur l'écran 20 les unes par rapport aux autres selon les positions relatives à bord du giravion 1 des différents jeux de caméras 2,3,4,5.

Sur la fig.2, un exemple de trajet T effectué par le giravion 1 est illustré sur schéma (c). Au fur et à mesure de la progression du giravion 1, différents jeux de caméras 2,3,4,5 fournissent séquentiellement à fréquence donnée les images capturées 6,7,8,9 à l'unité d'acquisition d'images 19.

Au cours de la saisie des images capturées 6,7,8,9, une étape de sélection 24 des images capturées 6,7,8,9 est effectuée par calcul pour valider leur exploitation en évitant d'encombrer les moyens de mémoire et/ou de saturer les capacités de calcul du système d'assistance à la navigation avec des images considérées inexploitables vis-à-vis d'un critère de pertinence 25 prédéfini.

Un tel critère de pertinence 25 est notamment relatif à une discontinuité territoriale D entre les différents territoires capturés 10 qui sont captés à un même instant par les différents jeux de caméras 2,3,4,5. A l'issue de cette étape de sélection 24, les images capturées 6,7,8,9 déduites par calcul non pertinentes au regard du critère d'intérêt 25 sont supprimées.

Par ailleurs toujours au cours de l'acquisition des images capturées 6,7,8,9, une étape de repérage 26 d'un territoire d'intérêt 27 est effectuée par le pilote du giravion et/ou à partir d'une analyse par calcul des images capturées 6,7,8,9. Un tel territoire d'intérêt 27 est évalué par application d'au moins un critère d'intérêt 28 prédéfini relatif à une exploitation du territoire d'intérêt 27 par le giravion 1, tel qu'une faculté du territoire d'intérêt 27 à constituer une zone de posé, une zone de refuge, une zone de danger voire encore une zone d'intervention.

En cas d'une identification d'un territoire d'intérêt 27, une donnée d'intérêt 29 numérique est intégrée aux métadonnées 15,16,17,18. L'intégration de la donnée d'intérêt 29 est potentiellement effectuée manuellement sur requête 30 du pilote et/ou est automatiquement générée par des moyens de traitement algorithmiques 31 des images capturées 6,7,8,9 du type à reconnaissance de forme.

Le repérage des territoires d'intérêt 27 peut être exploité ultérieurement pour élaborer un plan de vol 32 sur requête 33 du pilote. Ledit plan de vol 32 est élaboré depuis la position courante du giravion 1 vers au moins un territoire d'intérêt 27 préalablement repéré. Pour assister le pilote dans l'élaboration du plan de vol 32, les territoires d'intérêt 27 peuvent être référencés selon leur critère d'intérêt dans une liste de territoires d'intérêt 27 potentiellement générée et affichée par un écran annexe 20' au cours de l'étape de repérage 26.

Une étape de texturation 34 des images capturées 6,7,8,9 peut être effectuée pour optimiser la qualité visuelle et le confort d'observation du monde extérieur Me affiché par l'écran 20. On relèvera à ce stade de la description qu'une telle étape de texturation 34 est de préférence effectuée par l'unité d'acquisition d'images 19 ou peut être effectuée par l'unité de traitement 23 lors de l'élaboration de cartes à localisation intégrée issues des images capturées 6,7,8,9, voire encore par l'unité d'affichage 21 lors de l'affichage des représentations du monde extérieur Me.

Les métadonnées 15,16,17,18 sont transmises à l'unité de traitement 23 pour la construction du monde reconstitué Mr et/ou du monde extrapolé Mex.

Des cartes frontales à localisation intégrée 35 sont prioritairement élaborées à partir des métadonnées frontales 15 au fur et à mesure de la capture des images frontales 6 et sont successivement stockées dans une première base de données 36. Les métadonnées complémentaires 16,17,18 sont stockées en attente dans une deuxième base de données 37 afin d'optimiser la disponibilité des capacités de calcul du système d'assistance à la navigation pour élaborer le plus rapidement possible les cartes frontales à localisation intégrée 35.

En cas de disponibilité des capacités de calcul 50 du système d'assistance à la navigation vis-à-vis d'un seuil de capacité de calcul 51 prenant en compte les contraintes prioritaires d'élaboration des cartes frontales à localisation intégrée 35, des cartes complémentaires à localisation intégrée 38 sont potentiellement élaborées à partir des métadonnées complémentaires 16,17,18. Les cartes complémentaires à localisation intégrée 38 sont stockées dans une troisième base de données 39 au fur et à mesure de leur élaboration dépendant de la disponibilité des capacités de calcul du système d'assistance à la navigation.

Le processus d'élaboration des cartes complémentaires à localisation intégrée 38 est susceptible d'être interrompu temporairement en fonction de la disponibilité immédiate des capacités de calcul du système d'assistance à la navigation. Il est préféré à ce stade d'élaboration des cartes complémentaires à localisation intégrée 38 d'exploiter les métadonnées complémentaires 16,17,18 selon un cheminement prenant en compte les images complémentaires 7,8,9 les plus récemment capturées vers les images complémentaires 7,8,9 les plus anciennement capturées.

En cas d'identification d'une perte brutale de visibilité de l'environnement extérieur du giravion 1 par le pilote, telle qu'en situation de nappes de brouillard ou en cas de formation de nuages de particules telle qu'en situation de « Brown-out/White-out », l'unité de traitement 23 est apte à générer un affichage du monde reconstitué Mr construit à partir des cartes frontales à localisation intégrée préalablement élaborées.

Une situation de perte de visibilité P est potentiellement identifiée sur requête 40 du pilote confronté à une telle situation, ou par une unité de calcul 41 mettant en oeuvre une opération d'analyse 42 de la variance d'intensité des pixels des images capturées 6,7,8,9. La perte de visibilité P est encore potentiellement identifiée par l'unité de calcul 41 opérant une comparaison 43 entre la hauteur-sol courante du giravion 1 fournie par l'instrumentation de bord 11 et un seuil de hauteur-sol prédéfini.

L'opération d'analyse 42 de la variance d'intensité des pixels des images capturées 6,7,8,9 comprend plus particulièrement une première opération de contrôle 44 de l'affichage du monde reconstitué Mr à laquelle succède en cas de requête d'affichage du monde extrapolé Mex une deuxième opération de contrôle 45 de l'affichage du monde extrapolé Mex.

En cas d'identification d'une perte de visibilité P, une opération de construction 46 du monde reconstitué Mr est mise en oeuvre par l'unité de traitement 23, le monde reconstitué Mr étant alors affiché sur l'écran 20 par l'intermédiaire de l'unité d'affichage 21. A cet effet, des cartes frontales à localisation intégrée 35 sont extraites de la première base de données 36 en fonction des données de navigation courantes 12-2 du giravion 1 fournies par l'instrumentation de bord 11 et comparées aux différentes données de navigation 12-1 respectivement intégrées aux métadonnées frontales 15 dont sont issues les cartes frontales à localisation intégrée 35.

Par ailleurs sur requête 47 du pilote, une opération de construction 48 du monde extrapolé Mex est mise en oeuvre par l'unité de traitement 23, le monde extrapolé Mex étant alors affiché sur l'écran 20 par l'intermédiaire de l'unité d'affichage 21. Le monde extrapolé Mex est construit à partir des cartes frontales à localisation intégrée 35 en fonction des données de navigation courantes 12-3 du giravion 1, tel que selon les modalités de construction du monde reconstitué Mr, auxquelles cartes frontales à localisation intégrée 35 sont adjointes des données complémentaires d'élévation de terrain 49 issues des métadonnées complémentaires 16,17,18.

Les données complémentaires d'élévation de terrain 49 sont adjointes aux cartes frontales à localisation intégrée 35 par mise en corrélation entre les données de datation 13 et les données d'origine 14 respectivement intégrées aux métadonnées frontales 15 et aux métadonnées complémentaires 16,17,18.

Plus particulièrement, tel que précédemment visé la variation des données de navigation courantes 12-3 du giravion 1 est exploitée pour extraire les cartes frontales à localisation intégrée 35. Selon les données d'origine 14 et les données de datation 13, les métadonnées complémentaires 16,17,18 issues des images complémentaires 7,8,9 capturées simultanément aux images frontales 6 dont sont issues les cartes frontales à localisation intégrée 35 sont extraites de la deuxième base de données 37 pour constituer les données complémentaires d'élévation de terrain 49 qui sont adjointes aux cartes frontales à localisation intégrée 35.

Le monde extrapolé Mex est alors affiché par mise en juxtaposition des cartes frontales à localisation intégrée 35 avec les données complémentaires d'élévation de terrain 49 adjointes aux cartes frontales à localisation intégrée 35, en fonction des données d'origine identifiant leur position les unes par rapport aux autres selon les positions relatives des différents jeux de caméras 2,3,4,5 à bord du giravion 1.

Les données complémentaires d'élévation de terrain 49 sont potentiellement constituées des cartes complémentaires à localisation intégrée 38 préalablement élaborées et extraites de la troisième base de données 39 et/ou sont constituées des métadonnées complémentaires 16,17,18.

Plus particulièrement à défaut de cartes complémentaires à localisation intégrée 38 disponibles, soit les cartes complémentaires à localisation intégrée 38 manquantes sont élaborées sous réserve d'une disponibilité des capacités de calcul 50 de l'unité de traitement 23 au regard du seuil de capacité de calcul 51, soit les métadonnées complémentaires 16,17,18 peuvent être directement exploitées pour être adjointes aux cartes frontales à localisation intégrée 35 à partir desquelles est construit le monde extrapolé Mex.

Un défaut de cartes complémentaires à localisation intégrée 38 peut aussi résulter d'une requête 52 du pilote à disposer rapidement du monde extrapolé Mex sans avoir à attendre la construction de l'ensemble des cartes complémentaires à localisation intégrée 38 nécessaires et/ou pour accélérer l'évolution de la dynamique d'affichage du monde extrapolé Mex en fonction de la disponibilité des capacités de calcul 50 du système d'assistance à la navigation.

Selon une forme avantageuse de réalisation, des informations temporelles peuvent être affichées pour procurer au pilote une aide à la décision vis-à-vis de l'exécution de ladite requête 52 à disposer rapidement du monde extrapolé Mex. De telles informations temporelles sont avantageusement relatives aux temps de calcul nécessaires à l'obtention des cartes complémentaires à localisation intégrée 38.

Sur la fig.3, l'exécution des opérations de construction et d'affichage du monde reconstitué Mr et/ou du monde extrapolé Mex sont soumises à ladite opération d'analyse par l'unité de traitement de la variance d'intensité des pixels des images capturées 6,7,8,9.

Lors d'une première opération de contrôle 44, une étape d'échantillonnage séquentiel 53 des images frontales 6 est effectuée, une plage glissante 54 d'un nombre prédéfini d'images frontales échantillonnées 55 étant définie. Une première variance d'intensité des pixels d'une image frontale échantillonnée médiane 56 est calculée et est comparée avec un premier seuil de variance 57 d'intensité de pixels.

Dans le cas où ladite première variance calculée est supérieure audit premier seuil de variance 57, l'étape d'échantillonnage des images frontales 6 est réitérée. Dans le cas contraire, la situation de perte de visibilité P est identifiée. La construction et l'affichage du monde reconstitué Mr sont alors autorisés.

Une deuxième opération de contrôle 45 est effectuée par l'unité de traitement 23 en cas de génération de la requête 47 du pilote visant à provoquer la construction et l'affichage du monde extrapolé Mex. Sous condition d'une autorisation de la construction et de l'affichage du monde reconstitué Mr, il est effectué un calcul séquentiel à fréquence donnée de deuxièmes variances 58 d'intensité des pixels des images capturées 6,7,8,9 à un instant donné par les différents jeux de caméras 2,3,4,5 et considérées deux à deux.

Lesdites deuxièmes variances 58 sont alors chacune comparées avec un deuxième seuil de variance 59 d'intensité de pixels. Dans le cas où lesdites deuxièmes variances 58 sont supérieures au deuxième seuil de variance 59, l'échantillonnage des images frontales 6 est réitéré. Dans le cas contraire, la construction et l'affichage du monde extrapolé Mex sont autorisés.

Le maintien de la construction et de l'affichage du monde extrapolé Mex sont conditionnés à la poursuite d'une analyse desdites deuxièmes variances 58 qui sont comparées avec un troisième seuil de variance 60 d'intensité de pixels d'une valeur supérieure audit deuxième seuil de variance 59.

Dans le cas où lesdites deuxièmes variances 58 sont supérieures au troisième seuil de variance 60, la construction et l'affichage du monde extrapolé Mex est interdite pour libérer de la capacité de calcul et de mémoire procurant la construction et l'affichage du monde reconstitué Mr. Dans le cas contraire, la construction et l'affichage du monde extrapolé Mex sont maintenus.

## Revendications

1. Procédé de mise en oeuvre d'un système d'assistance à la navigation d'un giravion (1) par construction et par affichage en vol d'une représentation dynamique du monde extérieur (Me) sur un écran (20), le dit procédé comprenant les opérations suivantes effectuées en vol :
-) sur requête (61) du pilote, capturer séquentiellement des images frontales (6) relatives à l'environnement extérieur du giravion (1) par au moins un jeu de caméras avant (2) embarquées sur le giravion (1) en étant orientées vers une ligne de visée avant commune,
-) élaborer séquentiellement par calcul des cartes frontales à localisation intégrée (35) à partir des images frontales (6) et des données de navigation (12-1) du giravion (1) fournies par l'instrumentation de bord (11) simultanément à la capture séquentielle des images frontales (6), puis stocker lesdites cartes frontales à localisation intégrée (35) dans une première base de données (36),
-) identifier une situation de perte de visibilité (P) provoquant la construction par calcul et l'affichage sur l'écran (20) d'une représentation dynamique du monde extérieur (Me), dite monde reconstitué (Mr), à partir d'une extraction séquentielle des cartes frontales à localisation intégrée (35) stockées dans la première base de données (36) selon la variation des données de navigation courantes (12-2) du giravion (1) comparées aux données de navigation (12-1) intégrées aux cartes frontales à localisation intégrée (35),
**caractérisé en ce que** le procédé comprend les opérations suivantes :
-) simultanément à la capture des images frontales (6), capturer séquentiellement des images complémentaires (7,8,9) relatives à l'environnement extérieur du giravion (1) par des jeux complémentaires de caméras (3,4,5), les images stéréoscopiques fournies individuellement par les caméras des différents jeux de caméras (2,3,4,5) équipant le giravion (1) étant dites images capturées (6,7,8,9), les jeux complémentaires de caméras (3,4,5) comprenant au moins un jeu de caméras latérales droites (5), au moins un jeu de caméras latérales gauches (4) et au moins un jeu de caméras arrière (3), les caméras d'un même jeu complémentaire de caméras (3,4,5) étant orientées vers une ligne de visée commune,
-) affecter par calcul à chacune des images capturées (6,7,8,9) des données de datation (13) fournies par l'instrumentation de bord (11) et des données d'origine (14) relatives à l'identification du jeu de caméras (2,3,4,5) dont sont issues les images capturées (6,7,8,9), par génération pour chacune des images capturées (6,7,8,9) de métadonnées (15,16,17,18) associant entre elles au moins les images capturées (6,7,8,9), lesdites données de datation (13) et lesdites données d'origine (14), dont des métadonnées frontales (15) propres aux images frontales (6) et intégrées dans les cartes à localisation intégrée (35) stockées dans ladite première base de données et dont des métadonnées complémentaires (16,17,18) propres aux images complémentaires (7,8,9) respectivement fournies par un jeu de caméras complémentaires (3,4,5) donné,
-) stocker les métadonnées complémentaires (16,17,18) dans une deuxième base de données (37) et élaborer séquentiellement par calcul lesdites cartes frontales à localisation intégrée (35),
-) sur requête (47) du pilote, construire par calcul et afficher sur l'écran (20) une représentation dynamique du monde extérieur (Me), dite monde extrapolé (Mex), le monde extrapolé (Mex) étant composé des cartes frontales à localisation intégrée (35) séquentiellement extraites de la première base de données (36) selon la variation des données de navigation courantes (12-3) du giravion comparées aux données de navigation (12-1) intégrées aux cartes frontales à localisation intégrée (35), auxquelles cartes frontales à localisation intégrée (35) extraites sont adjointes des données complémentaires d'élévation de terrain (49) issues des métadonnées complémentaires (16,17,18), ladite adjonction étant effectuée par mise en corrélation entre les données de datation (13) et les données d'origine (14) respectivement affectées aux images frontales (6) et aux images complémentaires (7,8,9), ladite mise en corrélation identifiant selon la variation des données de navigation courantes (12-3) du giravion (1) les positions relatives entre-elles des cartes frontales à localisation intégrée (35) et des données complémentaires d'élévation de terrain (49) issues des images capturées (6,7,8,9) fournies à un même instant par les différents jeux de caméras (2,3,4,5).

2. Procédé selon la revendication 1,
**caractérisé en ce que** les données complémentaires d'élévation de terrain (49) sont au moins en partie constituées par les métadonnées complémentaires (16,17,18) qui sont sélectivement extraites de la deuxième base de données (38) et adjointes aux cartes frontales à localisation intégrée (35).

3. Procédé selon la revendication 1,
**caractérisé en ce que** les données complémentaires d'élévation de terrain (49) sont au moins en partie constituées par des cartes complémentaires à localisation intégrée (38) préalablement construites et stockées dans une troisième base de données (39), les cartes complémentaires à localisation intégrée (38) étant construites à partir des métadonnées complémentaires (16,17,18) intégrant les données de navigation (13-1) du giravion (1) fournies par l'instrumentation de bord (11) simultanément à la capture séquentielle des images complémentaires (16,17,18), la construction préalable des cartes complémentaires à localisation intégrée (38)
étant opérée sous réserve d'une capacité de calcul (50) du système d'assistance à la navigation évaluée disponible vis-à-vis d'un seuil de capacité de calcul (51) prédéterminé.

4. Procédé selon les revendications 2 et 3,
**caractérisé en ce que** par suite de la requête (47) du pilote relative à la construction et à l'affichage dynamique du monde extrapolé (Mex), le procédé comprend en outre les opérations suivantes :
-) vérifier par calcul, au fur et à mesure de l'évolution dynamique de l'affichage du monde extrapolé (Mex), la disponibilité de cartes complémentaires à localisation intégrée (38) aptes à être corrélées avec les cartes frontales à localisation intégrée (35) pour construire et afficher le monde extrapolé (Mex), puis
-) en cas d'une telle disponibilité de cartes complémentaires à localisation intégrée (38), construire et afficher le monde extrapolé (Mex), sinon dans le cas contraire :
-) élaborer les cartes complémentaires à localisation intégrée (38) nécessaires à la construction et à l'affichage du monde extrapolé (Mex) sous réserve d'une capacité de calcul (50) du système d'assistance à la navigation évaluée disponible vis-à-vis du seuil de capacité de calcul (51), sinon :
-) extraire par calcul de la deuxième base de données (37) les métadonnées complémentaires (16,17,18) nécessaires à la construction et à l'affichage du monde extrapolé (Mex).

5. Procédé selon la revendication 4,
**caractérisé en ce que** l'opération d'extraction par calcul de la deuxième base de données (37) des métadonnées complémentaires (16,17,18) nécessaires à la construction et à l'affichage dynamique du monde extrapolé (Mex), est placée sous la dépendance d'une requête (52) du pilote.

6. Procédé selon l'une quelconque des revendications 1 à 5,
**caractérisé en ce qu'**au cours de l'opération de capture séquentielle des images capturées (6,7,8,9), le procédé comprend une étape de sélection (24) par calcul des images capturées (6,7,8,9) par application d'au moins un critère de pertinence (25) prédéfini relatif à une continuité territoriale entre les différents territoires capturés (10) respectivement captés à un même instant par les différents jeux de caméras (2,3,4,5), les images capturées (6,7,8,9) déduites non pertinentes au regard dudit critère de pertinence (25) étant supprimées préalablement à leur traitement par le système d'assistance à la navigation.

7. Procédé selon la revendication 6,
**caractérisé en ce que** ledit au moins un critère de pertinence (25) est prédéfini selon l'un quelconque au moins des paramètres de calcul suivants :
-) un premier seuil d'éloignement entre le giravion (1) et un territoire capturé (10) qui est capté à un instant donné par un quelconque jeu de caméras (2,3,4,5), et
-) un deuxième seuil d'éloignement entre différents territoires capturés (10) respectivement captés à un même instant par les différents jeux de caméras (2,3,4,5) équipant le giravion (1).

8. Procédé selon l'une quelconque des revendications 1 à 7,
**caractérisé en ce qu'**au cours de l'opération de capture séquentielle des images capturées (6,7,8,9), le procédé comprend une étape de repérage (26) d'au moins un territoire capturé (10), dit territoire d'intérêt (27), par application d'au moins un critère d'intérêt (28) prédéfini relatif à l'aptitude dudit territoire d'intérêt (27) à être exploité par le giravion (1), à l'issue de laquelle étape de repérage (26) une donnée d'intérêt (29) est sélectivement intégrée aux métadonnées (15,16,17,18) dont sont issues les images capturées (6,7,8,9) relatives audit territoire d'intérêt (27).

9. Procédé selon la revendication 8,
**caractérisé en ce que** sur requête (33) du pilote, le procédé comprend une opération d'élaboration d'un plan de vol (32) entre la position courante du giravion (1) et ledit au moins un territoire d'intérêt (27), ledit plan de vol (32) étant affiché en surimpression sur la représentation du monde extérieur (Me) affichée par l'écran (20).

10. Procédé selon l'une quelconque des revendications 8 et 9,
**caractérisé en ce que** ladite étape de repérage (26) étant effectuée par le pilote du giravion (1), la donnée d'intérêt (29) est intégrée aux métadonnées (15,16,17,18) sur requête (30) du pilote.

11. Procédé selon l'une quelconque des revendications 8 et 9,
**caractérisé en ce que** ladite étape de repérage (26) étant une opération de traitement algorithmique (31) des pixels des images capturées (6,7,8,9) de type à reconnaissance de forme, l'intégration de la donnée d'intérêt (29) aux métadonnées (15,16,17,18) est opérée par calcul conformément à une reconnaissance d'au moins une forme prédéfinie sur les images capturées (6,7,8,9).

12. Procédé selon l'une quelconque des revendications 8 à 11,
**caractérisé en ce que** ledit au moins un critère d'intérêt (28) est l'un quelconque au moins des critères d'intérêt suivants relatifs à l'aptitude d'un territoire d'intérêt (27) à constituer pour le giravion (1) : une zone de posé, une zone de refuge, une zone de danger et une zone d'intervention.

13. Procédé selon l'une quelconque des revendications 1 à 12,
**caractérisé en ce que** l'identification de ladite situation de perte de visibilité (P) est effectuée suivant l'une quelconque au moins des opérations suivantes :
-) une opération d'analyse (42) par calcul des pixels définissant les images capturées (6,7,8,9),
-) une opération de comparaison (43) par calcul entre la hauteur-sol courante du giravion et un seuil de hauteur-sol identifié générateur d'une situation de perte de visibilité (Brown-out/White-out), et/ou
-) sur requête (40) du pilote confronté à une situation de perte de visibilité (P).

14. Procédé selon l'une quelconque des revendications 1 à 13,
**caractérisé en ce que** le procédé comprend une opération de contrôle (44) de l'affichage du monde reconstitué (Mr) mettant eh oeuvre les étapes suivantes :
-) échantillonner (53) séquentiellement par calcul à une fréquence donnée un nombre prédéfini d'images frontales (6), dites images frontales échantillonnées (55),
-) établir par calcul une plage glissante (54) d'un nombre prédéfini de dites images frontales échantillonnées (55),
-) calculer une première variance d'intensité des pixels d'une image frontale échantillonnée médiane (56) de ladite plage et comparer par calcul ladite première variance calculée avec un premier seuil de variance (57) d'intensité de pixels, puis
-) dans le cas où ladite première variance calculée est supérieure audit premier seuil de variance (57), réitérer l'étape d'échantillonnage (53) des images frontales (6), sinon dans le cas contraire autoriser la construction et l'affichage dynamique du monde reconstitué (Mr).

15. Procédé selon la revendication 14,
**caractérisé en ce que** le procédé comprend une opération de contrôle (45) d'affichage du monde extrapolé (Mex) mettant en oeuvre les étapes suivantes :
-) dans le cas d'une autorisation de construction du monde reconstitué (Mr) par suite du contrôle de l'affichage du monde reconstitué (Mr), calculer des deuxièmes variances (58) d'intensité des pixels des images capturées (6,7,8,9) respectivement captées à un instant donné par les différents jeux de caméras (2,3,4,5) et considérées deux à deux,,
-) comparer par calcul lesdites deuxièmes variances (58) avec un deuxième seuil de variance (59) d'intensité de pixels, puis dans le cas où l'une au moins desdites deuxièmes variances (58) est supérieure au deuxième seuil de variance (59), réitérer l'opération de contrôle (44) d'affichage du monde reconstitué (Mr), sinon dans le cas contraire autoriser la construction et l'affichage du monde extrapolé (Mex), puis
-) comparer lesdites deuxièmes variances (58) avec un troisième seuil de variance (60) d'intensité de pixels d'une valeur supérieure audit deuxième seuil de variance (59), puis dans le cas où les dites deuxièmes variances (58) sont supérieures au troisième seuil de variance (60), interdire la construction et l'affichage du monde extrapolé (Mex) en maintenant l'exécution de l'opération de contrôle (44) de l'affichage du monde reconstitué (Mr), sinon dans le cas contraire maintenir la construction et l'affichage dynamique du monde extrapolé (Mex).

## Patentansprüche

1. Verfahren zur Anwendung eines Navigations-Hilfssystems eines Drehflügelflugzeugs (1), bei dem während des Flugs eine dynamische Darstellung der Außenwelt (Me) konstruiert und auf einem Bildschirm (20) angezeigt wird, wobei das Verfahren folgende, während des Flugs ausgeführte Schritte aufweist:
-) Auf Befehl (61) des Piloten sequentielles Erfassen von frontalen Bildern (6) der äußeren Umgebung des Drehflügelflugzeugs (1) durch mindestens einen Satz vorderer Kameras (2) an Bord des Drehflügelflugzeugs (1), die auf einer gemeinsamen vorderen Sichtlinie ausgerichtet sind,
-) sequentielles Erstellen von frontalen Karten mit integrierter Positionsbestimmung (35) durch Berechnung, ausgehend von frontalen Bildern (6) und Navigationsdaten (12-1) des Drehflügelflugzeugs (1), die von der Bordinstrumentierung (11) gleichzeitig mit der sequentiellen Aufnahme frontaler Bilder (6) geliefert werden, und dann Speichern der frontalen Karten mit integrierter Positionsbestimmung (35) in einer ersten Datenbank (36),
-) Identifizieren einer Situation des Sichtverlustes (B), die die Konstruktion durch Berechnung und die Anzeige auf dem Bildschirm (20) einer dynamischen Darstellung der Außenwelt (Me), rekonstruierte Welt (Mr) genannt, bewirkt, ausgehend von einer sequentiellen Extraktion von frontalen Karten mit integrierter Positionsbestimmung (35), die in der ersten Datenbank (36) gespeichert sind in Übereinstimmung mit der Veränderung aktueller Navigationsdaten (12-2) des Drehflügelflugzeugs (1) im Vergleich zu Navigationsdaten (12-1), die in den frontalen Karten mit integrierter Positionsbestimmung (35) enthalten sind,
**dadurch gekennzeichnet, dass** das Verfahren folgende Schritte aufweist:
-) gleichzeitig mit der Erfassung frontaler Bilder (6) sequentielles Erfassen ergänzender Bilder (7, 8, 9) von der äußeren Umgebung des Drehflügelflugzeugs (1) durch zusätzliche Sätze von Kameras (3, 4, 5), wobei die stereoskopischen Bilder, die einzeln von den Kameras verschiedener Kamerasätze (2, 3, 4, 5), mit denen das Drehflügelflugzeug (1) ausgerüstet ist, geliefert werden, sogenannte erfasste Bilder (6, 7, 8, 9) sind, wobei die zusätzlichen Kamerasätze (3, 4, 5) mindestens einen Satz rechter seitlicher Kameras (5), mindestens einen Satz seitlicher linker Kameras (4) und mindestens einen Satz hinterer Kameras (3) aufweisen, wobei die Kameras eines selben Satzes zusätzlicher Kameras (3, 4, 5) auf einer gemeinsamen Sichtlinie ausgerichtet sind,
-) Zuordnen, durch Berechnung zu jedem der erfassten Bilder (6, 7, 8, 9), von Datierungsdaten (13), die von der Bordinstrumentierung (11) geliefert werden, und von Ursprungsdaten (14) bezüglich der Identifizierung des Kamerasatzes (2, 3, 4, 5), von dem die erfassten Bilder (6, 7, 8, 9) ausgegeben werden durch Erzeugen von Metadaten (15, 16, 17, 18) für jedes erfasste Bild (6, 7, 8, 9), die untereinander mindestens die erfassten Bilder (6, 7, 8, 9), die Datierungsdaten (13) und die Ursprungsdaten (14) miteinander verknüpfen, worunter sich frontale Metadaten (15) befinden, die zu den frontalen Bildern (6) gehören und die in die Karten mit integrierter Positionsbestimmung (35) integriert sind, die in der ersten Datenbank gespeichert sind, und zusätzliche Metadaten (16, 17, 18), die zu den zusätzlichen Bildern (7, 8, 9) gehören, die jeweils von einem gegebenen Satz zusätzlicher Kameras (3, 4, 5) geliefert werden,
-) Speichern der zusätzlichen Metadaten (16, 17, 18) in einer zweiten Datenbank (37) und sequentielles Ausarbeiten der frontalen Karten mit integrierter Positionsbestimmung (35) durch Berechnung,
-) auf Befehl (47) des Piloten Konstruieren, durch Berechnung und Anzeigen auf dem Bildschirm (20), einer dynamischen Darstellung der Außenwelt (Me), extrapolierte Welt (Mex) genannt, wobei die extrapolierte Welt (Mex) zusammengesetzt ist aus frontalen Karten mit integrierter Positionsbestimmung (35), die sequentiell aus der ersten Datenbank (36) in Übereinstimmung mit der Veränderung von aktuellen Navigationsdaten (12-3) des Drehflügelflugzeugs, verglichen mit in frontale Karten mit integrierter Positionsbestimmung (35) integrierten Navigationsdaten (12-1), extrahiert werden, wobei den extrahierten frontalen Karten mit integrierter Positionsbestimmung (35) zusätzliche Daten von Geländeerhebungen (49) hinzugefügt sind, die von zusätzlichen Metadaten (16, 17, 18) ausgehen, wobei das Hinzufügen erfolgt durch ein In-Beziehung-Setzen von Datierungsdaten (13) mit den Ursprungsdaten (14), die jeweils den frontalen Bildern (6) und den zusätzlichen Bildern (7, 8, 9) zugeordnet sind, wobei das In-Beziehung-Setzen gemäß der Veränderung von aktuellen Navigationsdaten (12-3) des Drehflügelflugzeugs (1) die Relativpositionen frontaler Karten mit integrierter Positionsbestimmung (35) und zusätzliche Daten von Geländeerhebungen (49) identifiziert, die sich aus erfassten Bildern (6, 7, 8, 9) ergeben, die im gleichen Moment von den verschiedenen Kamerasätzen (2, 3, 4, 5) geliefert werden.

2. Verfahren nach Anspruch 1,
**dadurch gekennzeichnet, dass** die zusätzlichen Daten von Geländeerhebungen (49) mindestens teilweise aus den zusätzlichen Metadaten (16, 17, 18) bestehen, die selektiv der zweiten Datenbank (38) entnommen und frontalen Karten mit integrierter Positionsbestimmung (35) hinzugefügt werden.

3. Verfahren nach Anspruch 1,
**dadurch gekennzeichnet, dass** die zusätzlichen Daten von Geländeerhebungen (49) mindestens teilweise aus zusätzlichen Karten mit integrierter Positionsbestimmung (38) bestehen, die zuvor konstruiert und in einer dritten Datenbank (39) gespeichert wurden, wobei die zusätzlichen Karten mit integrierter Positionsbestimmung (38) ausgehend von zusätzlichen Metadaten (16, 17, 18) konstruiert werden, die Navigationsdaten (13-1) des Drehflügelflugzeugs (1), die von der Bordinstrumentierung (11) gleichzeitig mit der sequentiellen Erfassung von zusätzlichen Bildern (16, 17, 18) geliefert werden, wobei die vorangehende Konstruktion zusätzlicher Karten mit integrierter Positionsbestimmung (38) ausgeführt wird unter dem Vorbehalt einer Rechenkapazität (50) des Navigations-Hilfssystems, die gegenüber einem vorbestimmten RechenkapazitätsSchwellenwert (51) als verfügbar eingeschätzt wird.

4. Verfahren nach den Ansprüchen 2 und 3,
**dadurch gekennzeichnet, dass** infolge des Befehls (47) des Piloten bezüglich der Konstruktion und einer dynamischen Anzeige der extrapolierten Welt (Mex) das Verfahren außerdem folgende Schritte aufweist:
-) je nach der dynamischen Entwicklung der Anzeige der extrapolierten Welt (Mex) die Verfügbarkeit zusätzlicher Karten mit integrierter Positionsbestimmung (38), die mit den frontalen Karten mit integrierter Positionsbestimmung (35) korreliert werden können, um die extrapolierte Welt (Mex) zu konstruieren und anzuzeigen, durch Berechnung überprüft wird, und dann
-) im Falle einer Verfügbarkeit von zusätzlichen Karten mit integrierter Positionsbestimmung (38) Konstruieren und Anzeigen der extrapolierten Welt (Mex), anderfalls, im gegenteiligen Fall:
-) Ausarbeiten der zusätzlichen Karten mit integrierter Positionsbestimmung (38), die für die Konstruktion und Anzeige der extrapolierten Welt (Mex) notwendig sind, unter dem Vorbehalt einer Rechenkapazität (50) des Navigations-Hilfssystems, die gegenüber einem Rechenkapazitäts-Schwellenwert (51) als verfügbar eingeschätzt wird:
- Entnehmen der zusätzlichen Metadaten (16, 17, 18), die zur Konstruktion und Anzeige der extrapolierten Welt (Mex) notwendig sind, aus der zweiten Datenbank (37) durch Berechnung.

5. Verfahren nach Anspruch 4,
**dadurch gekennzeichnet, dass** das Entnehmen von zusätzlichen Metadaten (16, 17, 18), die notwendig sind für die Konstruktion und die dynamische Anzeige der extrapolierten Welt (Mex), aus der zweiten Datenbank (37) von einem Befehl (52) des Piloten abhängig gemacht wird.

6. Verfahren nach einem der Ansprüche 1 bis 5,
**dadurch gekennzeichnet, dass** während der sequentiellen Erfassung erfasster Bilder (6, 7, 8, 9) das Verfahren einen Schritt der Auswahl (24) durch Berechnung erfasster Bilder (6, 7, 8, 9) durch Anwendung mindestens eines vordefinierten Relevanzkriteriums (25) bezüglich einer geländemäßigen Kontinuität zwischen den verschiedenen erfassten Geländen (10) aufweist, die jeweils von den verschiedenen Sätzen von Kameras (2, 3, 4, 5) jeweils zur gleichen Zeit erfasst wurden, wobei die erfassten Bilder (6, 7, 8), die als bezüglich des Relevanzkriteriums (25) als nicht relevant beurteilt wurden, vor ihrer Verarbeitung durch das Navigations-Hilfssystem entfernt werden.

7. Verfahren nach Anspruch 6,
**dadurch gekennzeichnet, dass** das mindestens eine Relevanzkriterium (25) vordefiniert ist gemäß mindestens einem von folgenden Rechenparametern:
-) einem ersten Schwellenwert des Abstands zwischen dem Drehflügelflugzeug (1) und einem erfassten Gelände (10), das zu einem gegebenen Zeitpunkt durch einen beliebigen Satz Kameras (2, 3, 4, 5) erfasst wurde, und
-) einem zweiten Schwellenwert des Abstands zwischen verschiedenen erfassten Geländen (10), die jeweils zu einem gleichen Zeitpunkt von den verschiedenen Kamerasätzen (2, 3, 4, 5), mit denen das Drehflügelflugzeug (1) ausgerüstet ist, erfasst wurden.

8. Verfahren nach einem der Ansprüche 1 bis 7,
**dadurch gekennzeichnet, dass**, während der sequentiellen Erfassung erfasster Bilder (6, 7, 8, 9) das Verfahren einen Schritt der Ortung (26) mindestens eines erfassten Geländes (10), interessierendes Gelände (27) genannt, aufweist, durch Anwendung mindestens eines vordefinierten Interessenkriteriums (28) bezüglich einer Eignung des interessierenden Geländes (27), von dem Drehflügelflugzeug (1) benutzt zu werden, wobei am Ende des Ortungsschritts (26) eine interessierende Größe (29) selektiv den Metadaten (15, 16, 17, 18) hinzugefügt wird, aus denen die erfassten Bilder (6, 7, 8, 9) bezüglich des interessierenden Geländes (27) hervorgegangen sind.

9. Verfahren nach Anspruch 8,
**dadurch gekennzeichnet, dass** auf Befehl (33) des Piloten das Verfahren einen Schritt der Erstellung eines Flugplans (32) zwischen der aktuellen Position des Drehflügelflugzeugs (1) und dem mindestens einen interessierenden Gelände (27) aufweist, wobei der Flugplan (32) auf der Darstellung der Außenwelt (Me), die von dem Bildschirm (20) angezeigt wird, eingeblendet ist.

10. Verfahren nach einem der Ansprüche 8 und 9,
**dadurch gekennzeichnet, dass** der Ortungsschritt (26) von dem Piloten des Drehflügelflugzeugs (1) ausgeführt wird, wobei die interessierende Größe (29) auf Befehl (30) des Piloten in die Metadaten (15, 16, 17, 18) integriert ist.

11. Verfahren nach einem der Ansprüche 8 und 9,
**dadurch gekennzeichnet, dass** der Ortungsschritt (26) eine algorithmische Verarbeitung (31) von Pixeln erfasster Bilder (6, 7, 8, 9) vom Typ einer Formerkennung ist, wobei die Integration der interessierenden Größe (29) in die Metadaten (15, 16, 17, 18) ausgeführt wird durch eine Berechnung in Übereinstimmung mit einer Erkennung mindestens einer vordefinierten Form in den erfassten Bildern (6, 7, 8, 9).

12. Verfahren nach einem der Ansprüche 8 bis 11,
**dadurch gekennzeichnet, dass** das mindestens eine Interessenkriterium (28) mindestens ein beliebiges folgender Interessenkriterien bezüglich der Eignung eines interessierenden Geländes (27), für das Drehflügelflugzeug (1) einen Landeplatz, einen Rückzugsraum, eine Gefahrenzone und ein Einsatzgebiet darzustellen, ist.

13. Verfahren nach einem der Ansprüche 1 bis 12,
**dadurch gekennzeichnet, dass** die Identifizierung der Situation eines Sichtverlustes (P) gemäß mindestens einem der folgenden Schritte ausgeführt wird:
-) einer Analyse (42) durch Berechnung von Pixeln, die die erfassten Bilder (6, 7, 8, 9) definieren,
-) einem Vergleich (43) durch Berechnung zwischen der aktuellen Höhe des Drehflügelflugzeugs über Grund und einem Schwellenwert der Höhe über Grund, der identifiziert ist als Erzeuger einer Situation des Sichtverlustes (Brown-out/White-out), und/oder
-) auf Befehl (40) des Piloten, der mit einer Situation des Sichtverlustes (P) konfrontiert ist.

14. Verfahren nach einem der Ansprüche 1 bis 13,
**dadurch gekennzeichnet, dass** das Verfahren einen Schritt der Steuerung (44) der Anzeige der rekonstruierten Welt (Mr) aufweist mit den folgenden Schritten:
-) sequentielles Auswählen (53) durch Berechnung, bei einer gegebenen Frequenz, einer vordefinierten Anzahl frontaler Bilder (6), die ausgewählte frontale Bilder (55) genannt werden,
-) Erstellen durch Berechnung eines gleitenden Bereichs (54) einer vordefinierten Anzahl frontaler ausgewählter Bilder (55),
-) Berechnen einer Varianz der Intensität von Pixeln eines mittleren frontalen ausgesuchten Bildes (56) des Bereichs und Vergleichen durch Berechnung der ersten berechneten Varianz mit einem ersten Schwellenwert der Varianz (57) der Intensität von Pixeln, und dann
-) in dem Fall, in dem die erste berechnete Varianz größer als der erste Schwellenwert (57) der Varianz ist, Wiederholen des Auswahlschritts (53) von frontalen Bildern (6), andernfalls, im entgegengesetzten Fall, Autorisieren der Konstruktion und der dynamischen Anzeige der rekonstruierten Welt (Mr).

15. Verfahren nach Anspruch 14,
**dadurch gekennzeichnet, dass** das Verfahren einen Schritt der Steuerung (45) der Anzeige der extrapolierten Welt (Mex) aufweist mit den folgenden Schritten:
-) in dem Fall einer Autorisierung der Konstruktion der rekonstruierten Welt (Mr), infolge der Steuerung der Anzeige der rekonstruierten Welt (Mr), Berechnen zweiter Varianzen (58) der Intensität von Pixeln erfasster Bilder (6, 7, 8, 9), die jeweils zu einem gegebenen Zeitpunkt von verschiedenen Kamerasätzen (2, 3, 4, 5) erfasst wurden und die paarweise berücksichtigt werden,
-) Vergleichen durch Berechnung der zweiten Varianzen (58) mit einem zweiten Schwellenwert (59) von Varianzen der Intensität von Pixeln, und dann, im Fall, in dem mindestens eine der zweiten Varianzen (58) größer ist als der zweite Schwellenwert (59) der Varianz, Wiederholen des Steuerungsschritts (44) der Anzeige der rekonstruierten Welt (Mr), andernfalls, im gegenteiligen Fall, Autorisieren der Konstruktion und der Anzeige der extrapolierten Welt (Mex), daraufhin
-) Vergleichen der zweiten Varianzen (58) mit einem dritten Schwellenwert (60) der Varianz der Intensität von Pixeln mit einem Wert, der größer ist als der zweite Schwellenwert (59) der Varianz, dann, in dem Fall, in dem die zweiten Varianzen (58) größer sind als der dritte Schwellenwert (60) der Varianz, Untersagen der Konstruktion und der Anzeige der extrapolierten Welt (Mex) unter Beibehaltung der Ausführung des Schritts der Steuerung (44) der Anzeige der rekonstruierten Welt (Mr), andernfalls, im entgegengesetzten Fall, Beibehalten der Konstruktion und dynamischen Anzeige der extrapolierten Welt (Mex).

## Claims

1. Method of implementing a navigation assistance system of a rotorcraft (1) by constructing and by displaying in flight a dynamic representation of the outside world (Me) on a screen (20), said method comprising the following operations performed in flight:
-) on request (61) of the pilot, sequentially capturing front images (6) relating to the environment outside the rotorcraft (1) by at least one set of front cameras (2) on board the rotorcraft (1) and oriented towards a common front line of sight,
-) sequentially preparing by calculation front maps with incorporated localization (35) on the basis of the front images (6) and of navigation data (12-1) of the rotorcraft (1) provided by the on-board instrumentation (11) simultaneously with the sequential capture of the front images (8), then storing said front maps with incorporated localization (35) in a first database (36),
-) identifying a loss-of-visibility situation (P) leading to the construction by calculation and the display on the screen (20) of a dynamic representation of the outside world (Me), referred to as the reconstituted world (Mr), on the basis of a sequential extraction of the front maps with incorporated localization (35) stored in the first database (36) in accordance with the variation of the current navigation data (12-2) of the rotorcraft (1) compared with the navigation data (12-1) incorporated in the front maps with incorporated localization (35),
**characterized in that** the method comprises the following operations:
-) simultaneously with the capture of the front images (6), sequentially capturing complementary images (7,8,9) relating to the environment outside the rotorcraft (1) by complementary sets of cameras (3,4,5), the stereoscopic images delivered individually by the cameras of the various sets of cameras (2,3,4,5) with which the rotorcraft (1) is equipped being referred to as captured images (6,7,8,9), the complementary sets of cameras (3,4,5) comprising at least one set of right lateral cameras (5), at least one set of left lateral cameras (4) and at least one set of rear cameras (3), the cameras of a same complementary set of cameras (3,4,5) being oriented towards a common line of sight,
-) allocating by calculation to each of the captured images (6,7,8,9) dating data (13) delivered by the on-board instrumentation (11) and origin data (14) relating to the identification of the set of cameras (2,3,4,5) from which the captured images (6,7,8,9) stem, by generating for each of the captured images (6,7,8,9) metadata (15,16,17,18) associating with one another at least the captured images (6,7,8,9), said dating data (13) and said origin data (14), including front metadata (15) specific to the front images (6) and incorporated in the maps with incorporated localization (35) stored in said first database and including complementary metadata (16,17,18) specific to the complementary images (7,8,9) respectively delivered by a given set of complementary cameras (3, 4, 5),
-) storing the complementary metadata (16,17,18) in a second database (37) and preparing sequentially by calculation said front maps with incorporated localization (35),
-) on request (47) of the pilot, constructing by calculation and displaying on the screen (20) a dynamic representation of the outside world (Me), referred to as the extrapolated world (Mex), the extrapolated world (Mex) being made up of the front maps with incorporated localization (35) sequentially extracted from the first database (36) in accordance with the variation of the current navigation data (12-3) of the rotorcraft compared with the navigation data (12-1) incorporated in the front maps with incorporated localization (35), to which extracted front maps with incorporated localization (35) is added complementary terrain elevation data (49) derived from the complementary metadata (16,17,18), said adding being performed by correlating the dating data (13) and the origin data (14) respectively allocated to the front images (6) and to the complementary images (7,8,9), said correlation identifying according to the variation of the current navigation data (12-3) of the rotorcraft (1) the relative positions between the front maps with incorporated localization (35) and the complementary terrain elevation data (49) derived from the captured images (6,7,8,9) delivered at a same instant by the various sets of cameras (2,3,4,5).

2. Method according to claim 1,
**characterized in that** the complementary terrain elevation data (49) are constituted at least in part by the complementary metadata (16,17,18) which is selectively extracted from the second database (38) and added to the front maps with incorporated localization (35).

3. Method according to claim 1,
**characterized in that** the complementary terrain elevation data (49) are constituted at least in part by complementary maps with incorporated localization (38) previously constructed and stored in a third database (39), the complementary maps with incorporated localization (38) being constructed from the complementary metadata (16,17,18) incorporating the navigation data (13-1) of the rotorcraft (1) delivered by the on-board instrumentation (11) simultaneously with the sequential capture of the complementary images (16,17,18), the prior construction of the complementary maps with incorporated localization (38) being performed subject to a calculation capacity (50) of the navigation assistance system evaluated as available in comparison with a predetermined calculation capacity threshold (51).

4. Method according to claims 2 and 3,
**characterized in that** following the request (47) of the pilot relating to the construction and the dynamic display of the extrapolated world (Mex), the method further comprises the following operations:
-) verifying by calculation, as the display of the extrapolated world (Mex) changes dynamically, the availability of complementary maps with incorporated localization (38) suitable for being correlated with the front maps with incorporated localization (35) in order to construct and display the extrapolated world (Mex), then
-) if complementary maps with incorporated localization (38) are available, constructing and displaying the extrapolated world (Mex), otherwise:
-) preparing complementary maps with incorporated localization (38) necessary for constructing and displaying the extrapolated world (Mex) subject to a calculation capacity (50) of the navigation assistance system evaluated as available in comparison with a calculation capacity threshold (51), otherwise:
-) extracting by calculation from the second database (37) the complementary metadata (16,17,18) necessary for constructing and displaying the extrapolated world (Mex).

5. Method according to claim 4,
**characterized in that** the operation of extracting by calculation from the second database (37) the complementary metadata (16,17,18) necessary for constructing and dynamically displaying the extrapolated world (Mex) is dependent on a request (52) of the pilot.

6. Method according to any one of claims 1 to 5,
**characterized in that** during the operation of sequentially capturing the captured images (6,7,8,9), the method comprises a step of selecting (24) by calculation captured images (6,7,8,9) by application of at least one predefined pertinence criterion (25) relating to a territorial continuity between the various captured territories (10) respectively captured at a same instant by the various sets of cameras (2,3,4,5), the captured images (6,7,8,9) deduced as not being pertinent with respect to said pertinence criterion (25) being eliminated prior to being processed by the navigation assistance system.

7. Method according to claim 6,
**characterized in that** said at least one pertinence criterion (25) is predefined depending on at least any one of the following calculation parameters:
-) a first distance threshold between the rotorcraft (1) and a captured territory (10) which is captured at a given instant by any one of the sets of cameras (2,3,4,5), and
-) a second distance threshold between various captured territories (10) respectively captured at a same instant by the various sets of cameras (2,3,4,5) with which the rotorcraft (1) is equipped.

8. Method according to any one claims 1 to 7,
**characterized in that** during the operation of sequentially capturing the captured images (6,7,8,9), the method comprises a locating step (26) for locating at least one captured territory (10), referred to as the territory of interest (27), by applying at least one predefined criterion of interest (28) relating to the suitability of said territory of interest (27) for being used by the rotorcraft (1), at the end of which locating step (26), data of interest (29) is selectively incorporated in the metadata (15,16,17,18) from which the captured images (6,7,8,9) relating to said territory of interest (27) are derived.

9. Method according to claim 8,
**characterized in that**, on request (33) of the pilot, the method comprises an operation of preparing a flight plan (32) between the current position of the rotorcraft (1) and said at least one territory of interest (27), said flight plan (32) being displayed superimposed on the representation of the outside world (Me) displayed by the screen (20).

10. Method according to any one of claims 8 and 9, **characterized in that** said locating step (26) being performed by the pilot of the rotorcraft (1), the data of interest (29) is incorporated in the metadata (15,16,17,18) on request (30) of the pilot.

11. Method according to any one of claims 8 and 9, **characterized in that** said locating step (26) being an operation of algorithmic processing (31) of the pixels of the captured images (6,7,8,9) of the shape recognition type, the incorporation of the data of interest (29) in the metadata (15,16,17,18) is performed by calculation in accordance with a recognition of at least one predefined shape in the captured images (6,7,8,9).

12. Method according to any one of claims 8 to 11, **characterized in that** said at least one criterion of interest (28) is at least any one of the following criteria of interest relating to the suitability of a territory of interest (27) for constituting for the rotorcraft (1): a landing zone, a refuge zone, a danger zone and an intervention zone.

13. Method according to any one of claims 1 to 12, **characterized in that** the identification of said loss-of-visibility situation (P) is performed according to at least any one of the following operations:
-) an operation of analysis (42) by calculation of the pixels defining the captured images (6,7,8,9),
-) an operation of comparison (43) by calculation between the current height above the ground of the rotorcraft and a threshold height above the ground identified as generating a loss-of-visibility situation (Brown-out/White-out), and/or
-) on request (40) of the pilot confronted with a loss-of-visibility situation (P).

14. Method according to any one of claims 1 to 13, **characterized in that** the method comprises an operation of checking (44) the display of the reconstituted world (Mr) performing the following steps:
-) sampling (53) sequentially by calculation at a given frequency a predefined number of front images (6), referred to as sampled front images (55),
-) establishing by calculation a moving range (54) of a predefined number of said sampled front images (55),
-) calculating a first pixel intensity variance of a median sampled front image (56) of said range and comparing by calculation said first calculated variance with a first pixel intensity variance threshold (57), then
-) in the event where said first calculated variance is greater than said first variance threshold (57), reiterating the step of sampling (53) the front images (6), otherwise authorizing the construction and the dynamic display of the reconstituted world (Mr).

15. Method according to claim 14,
**characterized in that** the method comprises an operation of checking (45) the display of the extrapolated world (Mex) performing the following steps:
-) in the event of an authorization of construction of the reconstituted world (Mr) as a result of the checking of the display of the reconstituted world (Mr), calculating second pixel intensity variances (58) of the of the captured images (6,7,8,9) respectively captured at a given instant by the various sets of cameras (2,3,4,5) and considered in pairs,
-) comparing by calculation said second variances (58) with a second pixel intensity variance threshold (59), then in the event where at least one of said second variances (58) is greater than the second variance threshold (59), reiterating the operation of checking (44) the display of the reconstituted world (Mr), otherwise authorizing the construction and the display of the extrapolated world (Mex), then
-) comparing said second variances (58) with a third pixel intensity variance threshold (60) having a value greater than said second variance threshold (59), then in the event where said second variances (58) are greater than the third variance threshold (60), prohibiting the construction and the display of the extrapolated world (Mex) while continuing to perform the operation of checking (44) the display of the reconstituted world (Mr), otherwise maintaining the construction and the dynamic display of the extrapolated world (Mex).
